# EUROPEAN PATENT SPECIFICATION

(11) **EP 3 862 714 B1**
(45) Date of publication and mention of the grant of the patent: **17.08.2022**
(21) Application number: 20156239.4
(22) Date of filing: 07.02.2020
(51) Int. Cl.: F28F 9/02, F28F 27/00, G01K 1/143, G01K 13/02, G01K 1/16

(54) **TEMPERATURE SENSOR FIXATION ON MICROCHANNEL HEAT EXCHANGER**
TEMPERATURSENSORBEFESTIGUNG AN MIKROKANALWÄRMETAUSCHER
FIXATION DE CAPTEUR DE TEMPÉRATURE SUR UN ÉCHANGEUR DE CHALEUR À MICROCANAUX

(43) Date of publication of application: 11.08.2021
(73) Proprietor: Carrier Corporation, Palm Beach Gardens, FL 33418 (US)
(72) Inventor: PANZER, GABRIELA, Mainz-Kostheim, 55246 (DE); VINZ, SASCHA, Mainz-Kostheim, 55246 (DE); SCHUSTER, MARKUS, Mainz-Kostheim, 55246 (DE); VALLÉE, CHRISTOPHE, Mainz-Kostheim, 55246 (DE); NEEB, CHRISTOPH, Mainz-Kostheim, 55246 (DE)
(74) Representative: Dehns

(56) References cited:
- WO-A1-99/67610
- JP-A- 2013 217 594
- KR-A- 20040 007 975
- KR-A- 20050 024 881
- US-A1- 2012 255 703
- US-A1- 2016 153 839

## Description

The present invention relates to microchannel heat exchangers, and specifically to fixation of a temperature sensor within a fin package of a microchannel heat exchanger.

Heat exchangers often include sensors for monitoring various aspects or parameters of the heat exchanger. Examples of typical parameters which are monitored include temperature and pressure. Some systems use the measurements from sensors in a heat exchanger to control aspects or components of a refrigeration system, e.g. activation or speed of a fan can be controlled based on temperature measurements. Location of the sensor within the heat exchanger will depend on the specific parameter being measured and the component being controlled based on the sensor measurements. Some sensors are located on the surface of the heat exchanger. Other sensors can be located within the heat exchanger, such as within the fin package. In the case of microchannel heat exchangers, sensors are used for control purposes such as air temperature control, surface temperature control and defrost termination control. To achieve optimal control the sensor must be able to accurately measure the parameter being monitored. Therefore optimal location and installation of sensors is important.

Previously, microchannel heat exchangers were predominantly used as condensers in refrigeration circuits. Condensers are not generally used for control purposes and so they do not usually include sensors, such as temperature sensors, to monitor parameters within the condenser. As such there has been no need for a standard mechanism for placement or fixation of temperature sensors in microchannel heat exchangers. Recently there has been an increased use of microchannel heat exchangers as evaporators in refrigeration circuits. Evaporators often use temperature sensors for control purposes, such as for control systems described above, and thus there is a new need for a mechanism for placement of a temperature sensor in a microchannel heat exchanger.

It can be difficult to use sensor measurements to control aspects of a refrigeration system when there is high variation of the parameter being measured by the sensor, for example high temperature variation. Temperature variation can be influenced by various factors such as location of the temperature sensor, and amount or stability of thermal contact between the temperature sensor and the component being monitored. It is particularly important to minimise temperature variation when a temperature sensor in a microchannel heat exchanger is used for control purposes. Optimal placement of the sensor is therefore of high importance in these systems.

In some conventional heat exchangers the sensor placement is uncontrolled and/or unspecified. For example there may be no standard location for fixing the temperature sensor to the heat exchanger and so the person installing the sensor has to arbitrarily decide on the placement of the sensor. This can lead to variation in the placement of the sensor among different heat exchangers which can cause temperature measurements to be inconsistent. Additionally the person installing the sensor may not position the sensor in the optimal location for achieving accurate and consistent measurements.

Some conventional heat exchangers provide a fixed location for a temperature sensor or a fixed housing into which the sensor can be placed. However it is often required for the temperature sensor or the sensor housing to be positioned in the heat exchanger during manufacture of the heat exchanger so that the heat exchanger can form around the sensor or housing. Such sensors or sensor housings thus form an integral part of the heat exchanger so cannot be easily removed or replaced. Furthermore some conventional heat exchangers require components of the heat exchanger to be physically deformed to enable placement and/or fixation of the sensor. This makes it very difficult or impossible for existing heat exchangers to be retrofitted with temperature sensors. Prior art microchannel heat exchangers with temperature detection are known e.g. from US 2012/255703 A1, JP 2013 217594 A, WO 99/67610 A1, KR 2005 0024881 A, KR 2004 0007975 A and US 2016/153839 A1.

Viewed from a first aspect, the present invention provides a microchannel heat exchanger according to claim 1.

The support assembly of the microchannel heat exchanger enables the temperature sensor to be securely positioned within the fin package and consistently placed in the predetermined position so that variation of temperature measurement between different heat exchangers is minimised. The heat exchanger and the support assembly may be mass manufactured and it is important to ensure a consistent placement of the sensor in order that the measured temperature of the fin package has a consistent relationship with the operating conditions of the heat exchanger, i.e. internal temperatures and the temperature of a fluid (such as a refrigerant) within the heat exchanger. The predetermined position may place the thermosensitive element of the temperature sensor between a predetermined pair of adjacent microchannel tubes and/or at a certain distance from edges or outer surfaces of the heat exchanger. The support assembly provides a stable and robust mechanism for fixing the temperature sensor to prevent movement of the sensor, as well as ensuring consistent placement of the sensor so that consistent measurements are achieved.

The heat exchanger may be heat absorbing heat exchanger, such as a microchannel evaporator for a refrigeration system. It can be of particular benefit to obtain an accurate and reliable temperature measurement in that context, such as for determining an inlet or outlet temperature of the heat absorbing heat exchanger to thereby enable accurate control of superheat or other parameters of a refrigeration system.

The fin package comprises a plurality of fins and a plurality of microchannel tubes. The fins and microchannel tubes may be brazed together. Refrigerant can flow through the microchannel tubes during use of the heat exchanger. The microchannel tubes may be microchannel flat tubes. The fins increase the contact area of air in the fin package to increase the heat transfer in the heat exchanger. The temperature sensor is a sensor capable of measuring the temperature of the fin package and this would typically be done in order to determine the properties (i.e. temperature and/or changes in temperature) of the fluid within the fin package. Thus, an exterior temperature of the fin package may be used to infer information about the internal temperature, including changes to temperature and/or the rate of change. The temperature sensor may be arranged to measure the temperature of one or more fins of the fin package, such as by determining a temperature of the support block when it is in thermal contact with adjacent fins. The temperature sensor may be arranged to measure the temperature of one or more of the microchannel tubes, such as by determining a temperature of the support block when it is in thermal contact with adjacent microchannel tubes, and thus obtain information about the temperature of the refrigerant flowing within the tube. The measured temperature may be a temperature between the temperature of the microchannel tubes and the temperature of the fins. The temperature sensor may be a temperature probe. The sensor may have a substantially cylindrical shape. The temperature sensor may have a first end which extends into the fin package and a second end which is external to the fin package. The first end may be a thermosensitive end to measure the temperature of the fin package and thus may comprise the thermosensitive element. The thermosensitive element is an element that is sensitive to heat and fluctuations in temperature, such as an element having electrical properties (resistance, for example) that vary as the temperature varies. The first end may be housed within the opening of the support block of the support assembly. The second end may be a cable which may couple the thermosensitive end of the temperature sensor to a controller. The controller may control an aspect of a refrigeration system based on the measurements from the temperature sensor.

The support block is disposed between adjacent microchannel tubes of the fin package and has an opening configured to house the thermosensitive element of the temperature sensor. The support block may be termed a sensor case. The support block is advantageously arranged to make thermal contact with the adjacent microchannel tubes as well as with the thermosensitive element of the temperature sensor, such as by having a friction fit with the microchannel tubes and/or with the thermosensitive element. The support block may be brazed to the microchannel tubes, which may occur in the same step of the manufacturing process in which the microchannel tubes are brazed to the fins. Many configurations of support block are possible as long as they ensure good thermal contact between the temperature sensor and the fin package and ensure secure fixation of the temperature sensor within the fin package. For example the opening of the support block may include a bore extending partially or completely through the support block and the temperature sensor may be arranged inside the bore. The support block may include alignment formations for locating the temperature sensor in the predetermined position. For example, the bore may include alignment formations for guiding insertion of the temperature sensor to a required distance within the support block, to thereby place it at a required location relative to the extent of the fin package.

The support block may comprise two or more sections. This may allow ease of installation of the temperature sensing assembly. In one example the support block comprises a first section for insertion into the fin package from a first side of the heat exchanger, and a second section for insertion into the fin package from a second side of the heat exchanger. In this way the support block can be closely fitted from both sides, hence giving a good thermal contact, even when the shape of the fins or the microchannel tubes would not permit insertion of a single piece with the same close fit, such as when the gap between fins or microchannel tubes narrows toward a central part thereof.

The support block conveys thermal energy from the fin package to the temperature sensor. The support block may therefore be designed to optimise heat transfer to ensure accurate temperature readings by the temperature sensor. For example, the support block may comprise a good thermally conductive material such as a metal material. The microchannel heat exchanger typically comprises aluminium. The support block and/or other components of the sensor assembly may therefore comprise aluminium to reduce corrosion between components. The part of the temperature sensor which is housed in the support block may have an outer contour which matches an inner contour of the support block to maintain good thermal contact between the temperature sensor and the support block. The inner contour of the support block may be arranged to ensure a required positioning of the temperature sensor within the support block, and hence may provide an alignment formation as discussed above. An outer contour of the support block may be shaped to match the location of the support block within the fin package, and thus may match an outer contour of the adjacent microchannel tubes.

The securement device is fastened to the heat exchanger and may be disposed external to the fin package. The securement device may be fastened by a fastening mechanism such as a screw. The screw may comprise steel, such as non-corrosive steel. The securement device may be configured to enable the temperature sensor to extend therethrough. For example the securement device may comprise a hole which is sized to receive a part of the temperature sensor. To ensure a secure placement of the temperature sensor, an inner profile of the hole of the securement device may equal the outer profile of the temperature sensor. The profiles may closely match in such a way that the temperature sensor is able to be inserted into the hole during assembly but will still remain securely positioned after assembly. The securement device may hence avoid or prevent movement of the support block and/or of the temperature sensor once the support assembly has been assembled. The securement device may have a variety of configurations. An exemplary securement device is a bracket or a clip that fits around a header of the microchannel heat exchanger. The clip may comprise a central portion and two arms. Each arm may extend on either side of the fin package, such as by extending around the header of the microchannel heat exchanger. Each arm of the clip may include a hole into which the temperature sensor can extend. The position of the hole(s) may enable the temperature sensor to be consistently located in a predetermined position relative to the position of the securement device. Since the securement device extends around a header then the securement device will ensure the temperature sensor is positioned a predetermined distance from the header.

The temperature sensor may extend through the support block and the securement device. Since the securement device is fixed to the heat exchanger, the assembly therefore causes the temperature sensor and the support block to be fixed relative to the heat exchanger. There may be an additional fastening mechanism to fasten the temperature sensor to the securement device, such as a cable tie. This may ensure that each component of the temperature sensing assembly is fixed relative to each other and relative to the heat exchanger. When assembled, the support assembly therefore provides a stable and robust fixation of the temperature sensor in the microchannel heat exchanger, while also ensuring good thermal contact between the temperature sensor and the fin package. The temperature sensor may be able to be removed easily from the support block when desired, such as by a technician for replacement in the case of failure of the sensor. It is therefore beneficial that the sensor is secured in the support block by the securement device so it does not become displaced when it is not desired to remove the sensor, e.g. during operation or transportation of the microchannel heat exchanger.

The temperature sensing assembly is located close to a header of the microchannel heat exchanger, which may be the inlet header or the outlet header for a heat absorbing heat exchanger, such as an evaporator. It has been found that a temperature measured at the microchannel heat exchanger inlet is the most similar in value to the evaporation temperature, and thus a position between the inlet header and the fin package is an optimal sensor position for recording an accurate evaporation temperature. It can be of significance to determine the inlet temperature, such as in the context of assessing evaporator inlet conditions for a refrigeration circuit incorporating the heat exchanger as a heat absorbing heat exchanger. It can also be of significance to determine the outlet temperature, such as in the context of observing evaporator superheating. In this case the sensor may be positioned near the outlet header. The securement device fixes the temperature sensor and the support block to the header. For example, when the securement device is a bracket or a clip, the central portion may extend around the external surface of the header and each arm may extend along either side of the fin package.

As discussed previously, the concept of temperature sensor fixation when a microchannel heat exchanger is acting as an evaporator rather than a condenser is also considered to be new. The invention therefore provides a refrigeration circuit comprising an evaporator, wherein the evaporator includes the microchannel heat exchanger of the first aspect of the invention.

One exemplary use of such a refrigeration circuit is to refrigerate a compartment in a refrigerated display cabinet. Refrigerated compartments can be used to store and/or display perishable goods at particular conditions according to the requirements of the perishable goods which are being stored/displayed. Therefore the invention also provides a refrigerated display cabinet comprising: a refrigeration circuit comprising an evaporator, wherein the evaporator includes the microchannel heat exchanger of the first aspect of the invention, and a compartment to be refrigerated.

The microchannel heat exchanger may be operated such that the temperature sensor is above zero degrees Celsius. As discussed above, the present system advantageously ensures that the reading from the temperature sensor is similar to the evaporation temperature. The cabinet can therefore be operated without regular defrost periods. It is desirable to operate the refrigeration cabinet without regular defrost periods because then there is no need for defrost heaters, which leads to energy savings and cost savings. A refrigerated cabinet with a microchannel heat exchanger operating in this way may be termed a frost-free cabinet due to the prevention of the accumulation of frost in the system.

From a further aspect, there is provided a method of assembling a microchannel heat exchanger according to claim 15.

The method may comprise inserting a first section of the support block into the fin package from a first side of the heat exchanger, and inserting a second section of the support block into the fin package from a second side of the heat exchanger. The header of the microchannel heat exchanger may be an inlet header. The method may comprise fastening the temperature sensor to the securement device.

The microchannel heat exchanger may be the microchannel heat exchanger according to the first aspect. The microchannel heat exchanger may comprise any of the features described above.

Certain embodiments will now be described by way of example only and with reference to the accompanying drawings, in which:
Figure 1A illustrates a microchannel heat exchanger with a temperature sensor fixation mechanism in a disassembled state;
Figure 1B shows the microchannel heat exchanger of Figure 1A in an assembled state;
Figure 2A illustrates a temperature sensor and a support block of the temperature sensor fixation mechanism in a disassembled state;
Figure 2B shows the temperature sensor and the support block of Figure 2A in an assembled state; and
Figure 3 illustrates a securement device of the temperature sensor fixation mechanism.

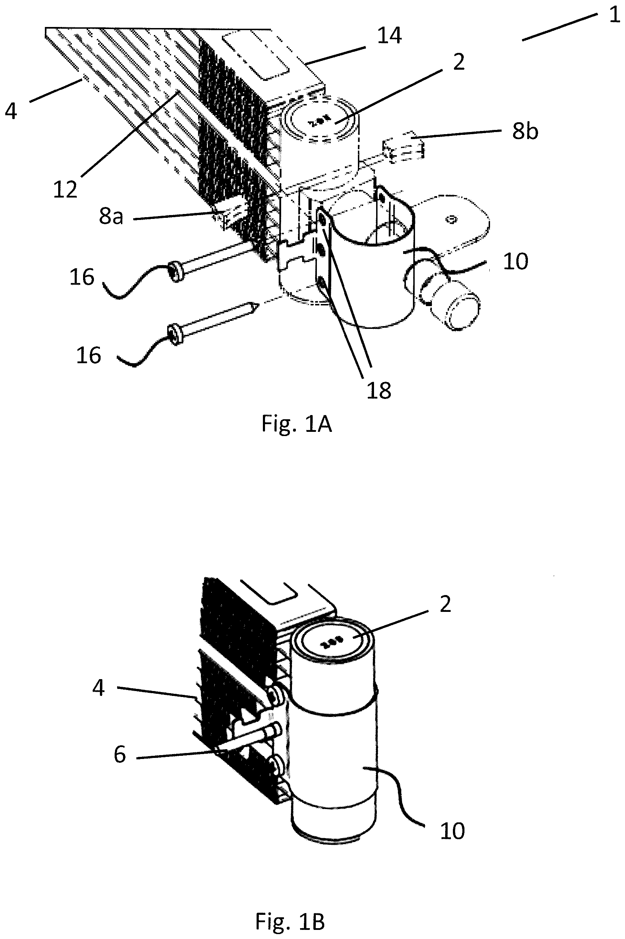

Figures 1A and 1B show a microchannel heat exchanger 1 comprising a header 2 and a plurality of fins and a plurality of microchannel tubes arranged in a fin package 4. The fins increase the contact area of air in the fin package to increase the heat transfer in the heat exchanger. The microchannel tubes, which can be microchannel flat tubes, allow refrigerant to flow therethrough. Figures 1A and 1B show components used to fix a temperature sensor 6 in the fin package 4 in a predetermined position so that the temperature sensor 6 can detect a temperature of the fin package 4 with consistency. In Figure 1A the components are shown in a disassembled state so that all the components can be seen. In Figure 1B the components are arranged in an assembled state.

The components used to secure the temperature sensor 6 in the fin package 4 include a support block 8a, 8b (referred to collectively as support block 8) and a securement device 10.

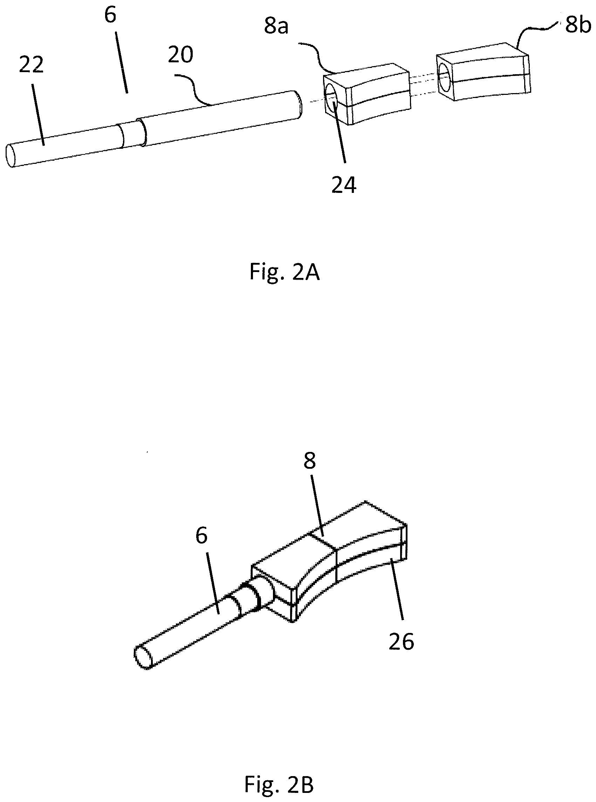

In the assembled state the support block 8 is disposed between adjacent microchannel tubes of the fin package 4. As shown in Figure 1A, the support block 8 comprises a first section 8a and a second section 8b. During installation of the support block 8 in the fin package 4, the first section 8a of the support block 8 may be inserted into the fin package 4 from a first side 12 of the heat exchanger 1 and the second section 8b of the support block 8 may be inserted into the fin package 4 from a second side 14 of the heat exchanger 1. The support block 8 includes an opening in which the temperature sensor 6 is housed. This can be seen more clearly in Figure 2A which will be described in more detail below.

The support block 8 is configured to provide thermal contact between the fin package 4 and a thermosensitive element of the temperature sensor 6. The support block 8 has an outer contour which is shaped to match the location of the support block 8 within the fin package 4. In the assembled state the support block 8 abuts the header 2. Thus the surface of the support block 8 that contacts the header 2 has a contour which matches the contour of the header 2. Other surfaces of the support block 8 have contours which match the contours of the microchannel tubes between which the support block 8 is disposed. The support block 8 is arranged between the adjacent microchannel tubes by a friction fit or by being brazed.

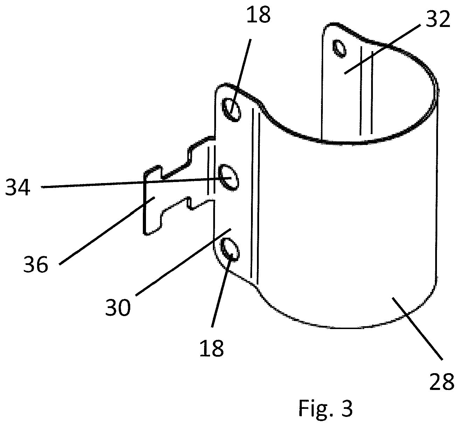

The securement device 10 is configured to secure the temperature sensor 6 in a predetermined position relative to the fin package 4. The structure of the securement device 10 can be seen more clearly in Figure 3, which is described below. In this example the securement device 10 is a clip which extends around the header 2 of the microchannel heat exchanger 1. The securement device 10 includes two arms. The first arm extends along the first side 12 of the fin package 4 and the second arm extends along the second side 14 of the fin package 4. The securement device 10 is fastened to the fin package 4 with fasteners 16. The fasteners 16 are screws in this example, but it will be appreciated that any suitable fasteners can be used. The fasteners 16 extend through holes 18 in the securement device 10 and extend into the fin package 4. This ensures that the securement device 10 is fixed relative to the fin package 4.

In the assembled state, the temperature sensor 6 (which can be seen in Figure 1B) extends through the securement device 10 and into the opening of the support block 8. The temperature sensor 6 comprises a first end 20 which is housed in the opening of the support block 8 and a second end 22 which is external to the fin package 4. These are shown more clearly in Figure 2A. The first end 20 comprises the thermosensitive element so that the temperature of the fin package 4 can be detected. The second end 22 is a cable which extends between the first end 20 and a switchbox (not shown). The switchbox may include a controller. The second end 22 may be fastened to the securement device 10.

Figure 2A shows the temperature sensor 6 and the support block 8 in a disassembled state and Figure 2B shows the temperature sensor 6 and the support block 8 in an assembled state.

As shown in Figure 2A, the temperature sensor 6 comprises a first end 20 and a second end 22. The temperature sensor 6 has a substantially cylindrical shape. The support block 8 comprises the first section 8a and the second section 8b which are in contact in the assembled state. As explained previously, this can allow for ease of installation of the support block 8. The support block 8 includes an opening 24, which is a bore 24 in this example. The bore 24 extends through the first section 8a and the second section 8b of the support block 8. In the assembled state the first end 20 of the temperature sensor 6 is housed in the bore 24. The outer surface of the temperature sensor 6 and the surface of the bore 24 have corresponding profiles and sizes. This ensures good thermal contact between the temperature sensor 6 and the support block 8 and prevents movement of the temperature sensor 6 within the support block 8. The temperature sensor 6 is arranged in the support block 8 by a friction fit.

Although not shown in the Figures, the support block 8 may include an alignment formation. The alignment formation may guide insertion of the temperature sensor 6 to a required distance within the support block 8, to thereby place it at a required location relative to the extent of the fin package 4.

As shown in Figure 2B, the support block 8 includes a curved surface 26. The curved surface 26 is shaped to correspond to a curved surface of the header 2. The support block 8 may therefore be positioned securely against the header 2, and good thermal contact between the support block 8 and the header 2 may be maintained.

Figure 3 shows the structure of the securement device 10. The securement device 10 includes a central portion 28 and two arms 30, 32. As shown in Figures 1A and 1B, in the assembled state the securement device 10 extends around the header 2 of the microchannel heat exchanger 1. The central portion 28 therefore has a curved profile to correspond to the curved profile of the header 2.

The securement device 10 includes at least one first hole 34 into which the temperature sensor 6 extends in the assembled state (see Figure 1B). The temperature sensor 6 may extend through one or both arms 30, 32 of the securement device 10. Therefore one or both of the arms 30, 32 may include the first hole 34 for receiving the temperature sensor 6. The securement device 10 also includes second holes 18 for receiving the fasteners 16. A projection feature 36 may extend outwardly from the securement device 10. In the assembled state the second end 22 of the temperature sensor 6 may extend along the projection feature 36. The projection feature 36 may provide support to the temperature sensor 6 in the assembled state to prevent damage to the sensor 6. The projection feature 36 may enable the temperature sensor 6 to be easily fastened to the securement device 10. For example a cable tie (not shown) may extend around the second end 22 of the temperature sensor 6 and the projection feature 36. This advantageously reduces the risk of the temperature sensor 6 being pulled out of the support block 8, such as during operation or transportation of the microchannel heat exchanger.

In the assembled state, the temperature sensor 6 is therefore held securely in a predetermined position relative to the fin package 4. It is therefore possible to obtain consistent temperature readings of the fin package 4.

## Claims

1. A microchannel heat exchanger (1) comprising:
a header (2);
a plurality of fins and a plurality of microchannel tubes arranged in a fin package (4);
a temperature sensor (6) arranged to detect a temperature of the fin package (4);
a support block (8) disposed between adjacent microchannel tubes in a predetermined position relative to the fin package (4) and abutting the header (2), wherein the support block (8) comprises an opening (24) arranged to house a thermosensitive element (20) of the temperature sensor (6), the support block (8) being configured to provide thermal contact between the fin package (4) and the thermosensitive element (20) of the temperature sensor (6); and
a securement device (10) arranged around the header (2) and fastened to the fin package (4), wherein the securement device (10) is configured to secure the thermosensitive element (20) of the temperature sensor (6) in the support block (8).

2. A microchannel heat exchanger as claimed in claim 1, wherein the temperature sensor (6) extends through the securement device (10) and into the opening (24) of the support block (8).

3. A microchannel heat exchanger as claimed in claim 1 or 2, wherein the securement device (10) is located external to the fin package (4).

4. A microchannel heat exchanger as claimed in claim 1, 2 or 3, wherein the predetermined position places the thermosensitive element (20) of the temperature sensor (6) between a predetermined pair of adjacent microchannel tubes and/or at a predetermined distance from an edge or outer surface of the heat exchanger (1).

5. A microchannel heat exchanger as claimed in any preceding claim, wherein the support block (8) is arranged to make thermal contact with the adjacent microchannel tubes by having a friction fit with the microchannel tubes or by being brazed to the microchannel tubes.

6. A microchannel heat exchanger as claimed in any preceding claim, wherein the support block (8) is arranged to make thermal contact with the thermosensitive element (20) of the temperature sensor (6) by having a friction fit with the thermosensitive element (20).

7. A microchannel heat exchanger as claimed in any preceding claim, wherein the opening (24) of the support block (8) includes a bore through the support block (8) and wherein the thermosensitive element (20) of the temperature sensor (6) extends into the bore.

8. A microchannel heat exchanger as claimed in any preceding claim, wherein the support block (8) includes an alignment formation for locating the temperature sensor (6) in the predetermined position.

9. A microchannel heat exchanger as claimed in any preceding claim, wherein the support block (8) comprises a first section (8a) for insertion into the fin package (4) from a first side of the heat exchanger (1) and a second section (8b) for insertion into the fin package from a second side of the heat exchanger (1).

10. A microchannel heat exchanger as claimed in any preceding claim, wherein the temperature sensor (6) is fastened to the securement device (10).

11. A microchannel heat exchanger as claimed in any preceding claim, wherein the securement device (10) is a bracket or a clip.

12. A microchannel heat exchanger as claimed in any preceding claim, wherein the header (2) is an inlet header.

13. A refrigeration circuit comprising an evaporator, wherein the evaporator is the microchannel heat exchanger (1) of any preceding claim.

14. A refrigerated display cabinet comprising the refrigeration circuit of claim 13 and a compartment to be refrigerated.

15. A method of assembling a microchannel heat exchanger (1) comprising:
arranging a plurality of fins and a plurality of microchannel tubes to form a fin package (4);
inserting a support block (8) in a predetermined position between adjacent microchannel tubes of the fin package and abutting a header (2) of the microchannel heat exchanger (1);
securing the support block (8) in the predetermined position;
arranging a securement device (10) around the header (2);
inserting a temperature sensor (6) through the securement device (10) and into an opening (24) of the support block (8); and
fastening the securement device (10) to the fin package (4) such that the securement device (10) secures the position of the temperature sensor (6) in the support block (8);
wherein the method optionally comprises providing the microchannel heat exchanger (1) with features as claimed in any of claims 1 to 12.

## Patentansprüche

1. Mikrokanalwärmetauscher (1), umfassend:
ein Sammelrohr (2);
eine Vielzahl von Rippen und eine Vielzahl von Mikrokanalrohren, die in einem Rippenpaket (4) angeordnet sind;
einen Temperatursensor (6), der zum Erfassen einer Temperatur des Rippenpakets (4) angeordnet ist;
einen Trägerblock (8), der zwischen angrenzenden Mikrokanalrohren in einer vorbestimmten Position relativ zu dem Rippenpaket (4) angeordnet ist und an das Sammelrohr (2) anliegt, wobei der Trägerblock (8) eine Öffnung (24) umfasst, die zur Aufnahme eines thermosensitiven Elements (20) des Temperatursensors (6) angeordnet ist, wobei der Trägerblock (8) konfiguriert ist, um thermischen Kontakt zwischen dem Rippenpaket (4) und dem thermosensitiven Element (20) des Temperatursensors (6) bereitzustellen; und
eine Sicherungsvorrichtung (10), die um das Sammelrohr (2) angeordnet und an dem Rippenpaket (4) befestigt ist, wobei die Sicherungsvorrichtung (10) konfiguriert ist, um das thermosensitive Element (20) des Temperatursensors (6) in dem Trägerblock (8) zu sichern.

2. Mikrokanalwärmetauscher nach Anspruch 1, wobei sich der Temperatursensor (6) durch die Sicherungsvorrichtung (10) und in die Öffnung (24) des Trägerblocks (8) erstreckt.

3. Mikrokanalwärmetauscher nach Anspruch 1 oder 2, wobei sich die Sicherungsvorrichtung (10) außerhalb des Rippenpakets (4) befindet.

4. Mikrokanalwärmetauscher nach Anspruch 1, 2 oder 3, wobei die vorbestimmte Position das thermosensitive Element (20) des Temperatursensors (6) zwischen einem vorbestimmten Paar von angrenzenden Mikrokanalrohren und/oder in einem vorbestimmten Abstand von einer Kante oder Außenoberfläche des Wärmetauschers (1) anordnet.

5. Mikrokanalwärmetauscher nach einem vorstehenden Anspruch, wobei der Trägerblock (8) so angeordnet ist, dass er einen thermischen Kontakt mit den angrenzenden Mikrokanalrohren herstellt, indem er einen Reibschluss mit den Mikrokanalrohren aufweist oder mit den Mikrokanalrohren verlötet ist.

6. Mikrokanalwärmetauscher nach einem vorstehenden Anspruch, wobei der Trägerblock (8) so angeordnet ist, dass er mit dem thermosensitiven Element (20) des Temperatursensors (6) einen thermischen Kontakt herstellt, indem er einen Reibschluss mit dem thermosensitiven Element (20) aufweist.

7. Mikrokanalwärmetauscher nach einem vorstehenden Anspruch, wobei die Öffnung (24) des Trägerblocks (8) eine Bohrung durch den Trägerblock (8) einschließt,
und wobei sich das thermosensitive Element (20) des Temperatursensors (6) in die Bohrung erstreckt.

8. Mikrokanalwärmetauscher nach einem vorstehenden Anspruch, wobei der Trägerblock (8) eine Ausrichtungsformation zum Positionieren des Temperatursensors (6) in der vorbestimmten Position einschließt.

9. Mikrokanalwärmetauscher nach einem vorstehenden Anspruch, wobei der Trägerblock (8) einen ersten Bereich (8a) zum Einsetzen in das Rippenpaket (4) von einer ersten Seite des Wärmetauschers (1) und einen zweiten Bereich (8b) zum Einsetzen in das Rippenpaket von einer zweiten Seite des Wärmetauschers (1) umfasst.

10. Mikrokanalwärmetauscher nach einem vorstehenden Anspruch, wobei der Temperatursensor (6) an der Sicherungsvorrichtung (10) befestigt ist.

11. Mikrokanalwärmetauscher nach einem vorstehenden Anspruch, wobei die Sicherungsvorrichtung (10) eine Klammer oder ein Clip ist.

12. Mikrokanalwärmetauscher nach einem vorstehenden Anspruch, wobei das Sammelrohr (2) ein Einlasssammelrohr ist.

13. Kältekreislauf, umfassend einen Verdampfer, wobei der Verdampfer der Mikrokanalwärmetauscher (1) nach einem vorstehenden Anspruch ist.

14. Gekühlter Schaukasten, umfassend den Kältekreislauf nach Anspruch 13 und ein zu kühlendes Fach.

15. Verfahren zum Aufbau eines Mikrokanalwärmetauschers (1), umfassend:
Anordnen einer Vielzahl von Rippen und einer Vielzahl von Mikrokanalrohren zur Bildung eines Rippenpakets (4);
Einsetzen eines Trägerblocks (8) in einer vorbestimmten Position zwischen angrenzende Mikrokanalrohre des Rippenpakets und Anlegen an ein Sammelrohr (2) des Mikrokanalwärmetauschers (1);
Sichern des Trägerblocks (8) in der vorbestimmten Position:
Anordnen einer Sicherungsvorrichtung (10) um das Sammelrohr (2);
Einsetzen eines Temperatursensors (6) durch die Sicherungsvorrichtung (10) und in eine Öffnung (24) des Trägerblocks (8); und
Befestigen der Sicherungsvorrichtung (10) an dem Rippenpaket (4), sodass die Sicherungsvorrichtung (10) die Position des Temperatursensors (6) im Trägerblock (8) sichert;
wobei das Verfahren optional das Bereitstellen des Mikrokanalwärmetauschers (1) mit Merkmalen nach einem der Ansprüche 1 bis 12, umfasst.

## Revendications

1. Échangeur de chaleur à microcanaux (1) comprenant :
un collecteur (2) ;
une pluralité d'ailettes et une pluralité de tubes à microcanaux agencés en un groupe d'ailettes (4) ;
un capteur de température (6) agencé pour détecter une température du groupe d'ailettes (4) ;
un bloc de support (8) disposé entre des tubes à microcanaux adjacents en une position prédéterminée par rapport au groupe d'ailettes (4) et venant en butée contre le collecteur (2), dans lequel le bloc de support (8) comprend une ouverture (24) agencée pour loger un élément thermosensible (20) du capteur de température (6), le bloc de support (8) étant configuré pour assurer un contact thermique entre le groupe d'ailettes (4) et l'élément thermosensible (20) du capteur de température (6) ; et
un dispositif de maintien (10) agencé autour du collecteur (2) et fixé au groupe d'ailettes (4), dans lequel le dispositif de maintien (10) est configuré pour maintenir l'élément thermosensible (20) du capteur de température (6) dans le bloc de support (8).

2. Échangeur de chaleur à microcanaux selon la revendication 1, dans lequel le capteur de température (6) s'étend à travers le dispositif de maintien (10) et dans l'ouverture (24) du bloc de support (8).

3. Échangeur de chaleur à microcanaux selon la revendication 1 ou 2, dans lequel le dispositif de maintien (10) est situé à l'extérieur du groupe d'ailettes (4).

4. Échangeur de chaleur à microcanaux selon la revendication 1, 2 ou 3, dans lequel la position prédéterminée place l'élément thermosensible (20) du capteur de température (6) entre une paire prédéterminée de tubes à microcanaux adjacents et/ou à une distance prédéterminée d'un bord ou d'une surface externe de l'échangeur de chaleur (1).

5. Échangeur de chaleur à microcanaux selon une quelconque revendication précédente, dans lequel le bloc de support (8) est agencé pour établir un contact thermique avec les tubes à microcanaux adjacents en présentant un ajustement serré avec les tubes à microcanaux et en étant brasé sur les tubes à microcanaux.

6. Échangeur de chaleur à microcanaux selon une quelconque revendication précédente, dans lequel le bloc de support (8) est agencé pour établir un contact thermique avec l'élément thermosensible (20) du capteur de température (6) en présentant un ajustement serré avec l'élément thermosensible (20).

7. Échangeur de chaleur à microcanaux selon une quelconque revendication précédente, dans lequel l'ouverture (24) du bloc de support (8) inclut un alésage à travers le bloc de support (8)
et dans lequel l'élément thermosensible (20) du capteur de température (6) s'étend dans l'alésage.

8. Échangeur de chaleur à microcanaux selon une quelconque revendication précédente, dans lequel le bloc de support (8) inclut une formation d'alignement pour positionner le capteur de température (6) dans la position prédéterminée.

9. Échangeur de chaleur à microcanaux selon une quelconque revendication précédente, dans lequel le bloc de support (8) comprend une première section (8a) destinée à être insérée dans le groupe d'ailettes (4) depuis un premier côté de l'échangeur de chaleur (1) et une seconde section (8b) destinée à être insérée dans le groupe d'ailettes depuis un second côté de l'échangeur de chaleur (1).

10. Échangeur de chaleur à microcanaux selon une quelconque revendication précédente, dans lequel le capteur de température (6) est fixé au dispositif de maintien (10).

11. Échangeur de chaleur à microcanaux selon une quelconque revendication précédente, dans lequel le dispositif de maintien (10) est une patte de fixation ou un collier de serrage.

12. Échangeur de chaleur à microcanaux selon une quelconque revendication précédente, dans lequel le collecteur (2) est un collecteur d'entrée.

13. Circuit de réfrigération comprenant un évaporateur, dans lequel l'évaporateur est l'échangeur de chaleur à microcanaux (1) selon une quelconque revendication précédente.

14. Vitrine réfrigérée comprenant le circuit de réfrigération selon la revendication 13 et un compartiment à réfrigérer.

15. Procédé d'assemblage d'un échangeur de chaleur à microcanaux (1) comprenant :
l'agencement d'une pluralité d'ailettes et d'une pluralité de tubes à microcanaux pour former un groupe d'ailettes (4) ;
l'insertion d'un bloc de support (8) en une position prédéterminée entre des tubes à microcanaux adjacents du groupe d'ailettes et la mise en butée d'un collecteur (2) de l'échangeur de chaleur à microcanaux (1) ;
le maintien du bloc de support (8) dans la position prédéterminée ;
l'agencement d'un dispositif de maintien (10) autour du collecteur (2) ;
l'insertion d'un capteur de température (6) à travers le dispositif de maintien (10) et dans une ouverture (24) du bloc de support (8) ; et
la fixation du dispositif de maintien (10) au groupe d'ailettes (4) de sorte que le dispositif de maintien (10) maintienne la position du capteur de position (6) dans le bloc de support (8) ;
dans lequel le procédé comprend éventuellement l'attribution à l'échangeur de chaleur à microcanaux (1) de caractéristiques selon l'une quelconque des revendications 1 à 12.
